# EUROPEAN PATENT SPECIFICATION

(11) **EP 3 732 032 B1**
(45) Date of publication and mention of the grant of the patent: **01.02.2023**
(21) Application number: 18834062.4
(22) Date of filing: 21.12.2018
(51) Int. Cl.: B29D 30/24

(54) **DRUM FOR BUILDING A TYRE FOR TWO-WHEELED VEHICLES AND METHOD FOR CONTROLLING THE GEOMETRY OF SAID DRUM IN A PROCESS FOR BUILDING SAID TYRE**
TROMMEL ZUM BAU EINES REIFENS FÜR ZWEIRADFAHRZEUGE UND VERFAHREN ZUR STEUERUNG DER GEOMETRIE DIESER TROMMEL IN EINEM VERFAHREN ZUM BAU DES REIFENS
TAMBOUR POUR LA CONSTRUCTION D'UN PNEUMATIQUE POUR VÉHICULES À DEUX ROUES ET PROCÉDÉ DE RÉGULATION DE LA GÉOMÉTRIE DUDIT TAMBOUR DANS UN PROCÉDÉ DE CONSTRUCTION DUDIT PNEUMATIQUE

(30) Priority: 28.12.2017 IT 201700150144
(43) Date of publication of application: 04.11.2020
(73) Proprietor: Pirelli Tyre S.p.A., 20126 Milano (IT)
(72) Inventor: CONTI, Davide Lupo, Georgia 30161-7000 (US); LODI, Bruno, 09111-310 Santo André (SP) (BR); BOSIO, Gian Luigi, 10136 Settimo Torinese (TO) (IT)
(74) Representative: Porta & Consulenti Associati S.p.A.
(86) International application number: PCT/IB2018/060493
(87) International publication number: WO 2019/130189

(56) References cited:
- EP-A2- 0 431 854
- EP-A2- 1 344 635
- WO-A1-2012/147012
- JP-A- S60 147 325
- JP-A- 2013 056 445
- US-A- 3 375 154
- US-A1- 2014 360 673

## Description

The present invention relates to a drum for building a tyre for two-wheeled vehicles.

The invention also relates to a method for controlling the geometry of a building drum in a process for building a tyre for two-wheeled vehicles.

The drum of the invention is preferably used for building a green tyre, to then be subjected to a molding and vulcanization cycle in order to obtain the finished tyre.

Typically, building a tyre for motor vehicle wheels, thus also for motorcycle or motorbike wheels, initially comprises building a carcass structure on a building drum and, thereafter, building the crown structure in a radially outer position with respect to the aforementioned carcass structure. The building of the carcass structure comprises depositing one or more carcass plies on the radially outer surface of the building drum (possibly after depositing a liner), positioning the bead cores at the end edges of the carcass ply(ies) and turning (with subsequent compacting) the end edges of the carcass ply(ies) around the bead cores to define the beads of the tyre.

The crown structure can be built on the same building drum on which the carcass structure has been built or, alternatively, on an auxiliary drum. In the latter case, the crown structure is subsequently arranged in a radially outer position with respect to the carcass structure and the latter is radially expanded to couple with the crown structure.

The built green tyres are then transferred to a molding and vulcanization line where a molding and vulcanization process adapted to define the structure of the tyre according to a desired geometry and tread pattern is carried out.

Building a tyre for bicycle wheels usually provides that one or more carcass plies are applied according to a cylindrical configuration around a radially outer surface of a building drum. Each bead core of a pair of bead cores is fitted or applied around one of the axially opposite end edges of the carcass ply(ies). The aforementioned end edges are then turned around the respective bead cores. A tread band is then applied around the carcass ply(ies), in an axially centered position with respect to the bead cores. The axial distance between the bead cores remains unchanged during the entire building process, even during the application of the tread band.

Once building is complete, the built green tyre for bicycle wheels is removed from the building drum to be transferred to a vulcanization mold or press, where the tyre is subjected to a molding and vulcanization treatment aimed at obtaining the structural stabilization through cross-linking of the elastomeric material comprised therein, as well as possibly at printing a desired tread pattern on the tread band.

The expression "elastomeric material" is used to indicate a composition comprising at least one elastomeric polymer and at least one reinforcing filler. Preferably, such a composition also comprises additives like, for example, a cross-linking agent and/or a plasticizer. Thanks to the provision of the cross-linking agent, such a material can be cross-linked through heating, so as to form the final manufactured product.

The terms "radial" and "axial" are used with reference to a direction parallel and perpendicular to a transverse mid-plane of the building drum, respectively, such a transverse mid-plane being perpendicular to a rotation axis of the drum. The expressions "radially inner/outer" indicate a position closer to or farther from the aforementioned rotation axis of the drum, respectively. The expressions "axially inner/outer" indicate a position closer to and farther from the aforementioned transverse mid-plane, respectively.

The terms "circumferential" and "circumferentially", on the other hand, are used with reference to the annular extension of the building drum.

The term "radial section" is used to indicate a section taken on a plane on which the rotation axis of the drum lies, differently from the "cross section" which, on the other hand, is a section taken on a plane perpendicular to the rotation axis of the drum.

The term "adjacent" is used to indicate a mutually proximal position of any two elements along a predetermined direction, with or without mutual contact and such that, in the case of absence of mutual contact, there is no further element between the aforementioned elements.

The term "width of the tyre" is used to indicate the axial size of the tyre measured along a direction parallel to the rotation axis thereof, corresponding to the rotation axis of the building drum. The width of the tyre is typically defined by the axial distance between the bead cores arranged in the two beads of the tyre.

The expression "substantially continuous surface" is used to indicate a surface that can be run in any direction without encountering interruption or void zones or in which the interruption or void zones have an extension lower than 1% with respect to the extension of the entire surface.

In the rest of the present invention, the expression "two-wheeled vehicles" is used to refer typically to motorcycles, motorbikes and bicycles.

An example of a drum for building tyres for bicycles is described in US 2715932.

An example of a drum for building motorcycles is described in EP 2572872 A1. Such a document illustrates in particular a building drum on the radially outer surface of which respective circumferential seats are formed, on axially opposite sides with respect to a transverse mid-plane of the drum, said circumferential seats being configured to house respective bead cores when the drum is in the position of maximum expansion thereof.

JP 60147325 describes a drum for building tyres of cars. Such a drum is of the expandable/contractible type and comprises a bead core housing circumferential groove. The drum also comprises a plurality of long segments and a plurality of short segments that are arranged one after the other in the circumferential direction. The short segments have an expansion/contraction stroke greater than that of the long segments. When the drum is in the expanded configuration thereof, the short segments occupy the void spaces arranged between the long segments, forming an almost continuous surface. When the drum is in the contracted configuration thereof, the short segments are arranged in a radially inner position with respect to the long segments.

US 3 375 154 A discloses a collapsible tire building drum comprising a plurality of segment assemblies arranged to form a continuous tire building surface, a shaft arranged within said segment assemblies and adapted for rotating said drum, a cone member mounted on and adapted for axial movement relative to said shaft, a plurality of angularly disposed pin means mounted on and in circumferentially spaced relationship around said cone member. The segment assemblies are slidably mounted on said pin means for radial collapsing and expanding movement of the segment assemblies upon axial movement of the cone member relative to the shaft.

The Applicant has observed that thanks to the circumferential seats provided in the drums of the type of those described in EP2572872 A1 and JP 60147325, it is possible to achieve a precise and stable positioning of the bead cores, to the benefit of the quality of the green tyre built.

The Applicant has also observed that when a drum of the type described in EP 2572872 A1 is in the position of maximum expansion, the radially outer surface of the drum has, at each of the aforementioned circumferential seats, a plurality of solid portions and a plurality of void portions, each void portion being arranged between two circumferentially consecutive solid portions.

The Applicant has verified that the aforementioned void portions can cause possible defects in the beads of the green tyre built.

In particular, the Applicant has verified in the beads of the green tyre, and in particular between the carcass ply and the respective bead core, air pockets can be trapped at the aforementioned void portions, wherein said air pockets, being trapped inside the bead of the tyre, can produce during the molding and vulcanization process irregularities such as to cause the finished tyre to be discarded. Indeed, such irregularities can lead to uncontrolled losses of air in operation and in the most serious cases to the unseating of the tyre.

The Applicant has observed that the extent of the aforementioned defects is as great as it is greater the circumferential size of the aforementioned void portions and that the latter is as great as it is smaller the desired diameter to be taken up by the drum in the position of maximum contraction thereof, for the same diameter of the drum in the position of maximum expansion thereof (and therefore the same fitting diameter of the green tyre to be built).

The Applicant has on the other side observed that it is desirable the diameter of the drum in the position of maximum contraction thereof to be as small as possible to make the unloading operation of the built green tyre easier.

The Applicant has observed that JP 60147325, which relates to the field of tyres for cars, does not provide any information on how to obtain the radial movement of the long and short segments of the drum in order to pass from the drum expanded configuration to the drum contracted configuration and vice-versa.

The Applicant has perceived that in order to reduce the risk of the aforementioned defects arising at the beads of the tyre it is advisable to provide a building drum having a variable geometry, the building drum comprising a plurality of first angular sectors provided with respective bead core housing grooves, and a plurality of second angular sectors also provided with respective bead core housing grooves, in which the first angular sectors and the second angular sectors are radially movable so that, when the drum is in the expanded configuration thereof, the second angular sectors occupy the void spaces arranged between the first angular sectors and the circumferential grooves of the second angular sectors are circumferentially aligned with the circumferential grooves of the first angular sectors to form a bead core housing annular seat that is substantially continuous in the circumferential direction.

The Applicant has also perceived that in order to allow an easy unloading of the built green tyre it is advisable, when the building drum is in the contracted configuration thereof, that the second angular sectors are arranged in a radially inner position with respect to the first angular sectors and the radially outer surface of the first angular sectors have a diameter that is as small as possible.

The Applicant has finally found that it is possible to satisfy both of the requirements discussed above in a constructively simple and functionally effective manner by providing that the radial movement of the first angular sectors is achieved by the sliding of each of the first angular sectors on a respective sliding block oriented so as to define, with the rotation axis of the building drum, a first angle of inclination and that the radial movement of the second angular sectors is achieved by the sliding of each of the second angular sectors on a respective sliding block oriented so as to define, with the rotation axis of the building drum, a second angle of inclination greater than said first angle of inclination.

The present invention therefore relates, in a first aspect thereof, to a drum for building a tyre for two-wheeled vehicles according to claim 1.

The drum of the invention, thanks to the provision of the aforementioned first angular sectors and second angular sectors and to the coordinated movement of such angular sectors by the sliding on the aforementioned first sliding blocks and second sliding blocks, has, when it is contracted, a small diameter, so as to allow an easy unloading of the built green tyre and, when it is expanded, bead core housing annular seats which are substantially continuous in the circumferential direction, so as to allow a green tyre to be built without undesired air pockets inside the beads.

The greater inclination of the second angular sectors with respect to that of the first angular sectors allows the second angular sectors, for the same axial movement, to carry out a stroke in the radial direction greater than that of the first angular sectors. In this way it is possible to ensure that when the drum is in the expanded configuration the second angular sectors are arranged in a position circumferentially adjacent to the first angular sectors and when the drum is in the contracted position they are arranged in a radially inner position with respect to the first angular sectors.

In a second aspect thereof, the invention relates to a method for controlling the geometry of a building drum in a process for building a tyre for two-wheeled vehicles, according to claim 12.

The method described above can be carried out by the drum according to the first aspect of the present invention and thus makes it possible to satisfy the same requirements satisfied by the aforementioned drum.

The present invention can comprise, in at least one of the aforementioned aspects, at least one of the preferred features described hereinafter.

Preferably, a first moving device is provided, the first moving device acting on said first angular sectors and second angular sectors to move said first angular sectors and second angular sectors between said respective first operative positions and second operative positions.

Preferably, said moving device comprises a first actuator associated with said first angular sectors and second angular sectors.

Preferably, said first actuator simultaneously moves said first angular sectors and second angular sectors between said respective first operative positions and second operative positions.

The simultaneous movement of the first angular sectors and of the second angular sectors is thus synchronized and is driven by the same actuator. Due to the different inclination of the aforementioned first sliding blocks and second sliding blocks, it is possible to ensure that the second angular sectors reach the desired position simultaneously with the first angular sectors both when the drum is in the expanded configuration thereof (second angular sectors circumferentially adjacent to the first angular sectors) and when the drum is in the contracted configuration thereof (second angular sectors arranged in a radially inner position with respect to the first angular sectors).

According to the invention, a stem is provided, the stem being arranged inside said shaft.

Said stem is movable along a direction parallel to said rotation axis. The axial movement of the stem drives the radial movement of the first angular sectors and of the second angular sectors and, therefore, the radial expansion/contraction of the drum.

Preferably, said stem is movable upon command of said first actuator.

According to the invention, a first bush is provided, the first bush being fixedly associated with said stem.

A first inclined sliding guide is provided, the first inclined sliding guide being fixedly associated with said first bush.

Said first inclined sliding guide is inclined with respect to said rotation axis by said first angle.

Said first sliding block is slidably associated with said first inclined sliding guide.

According to the invention, a second bush is provided, the second bush being fixedly associated with said stem.

A second inclined sliding guide is provided, the second inclined sliding guide being fixedly associated with said second bush.

Said second inclined sliding guide is inclined with respect to said rotation axis by said second angle.

Said second sliding block is slidably associated with said second inclined sliding guide.

The radial movement of the first angular sectors and of the second angular sectors between the respective first operative positions and second operative positions is thus obtained by the sliding of the respective sliding blocks on the respective inclined sliding guides as a consequence of the axial movement of the latter. This movement is obtained as a consequence of the axial movement of the aforementioned bushes upon the axial movement of the stem driven by the aforementioned actuator.

Preferably, a plurality of first radial sliding guides is provided.

Preferably, said first radial sliding guides have a first predetermined axial position.

Preferably, said first radial sliding guides are arranged on one side with respect to a transverse mid-plane of the drum.

Preferably, a plurality of second radial sliding guides are provided.

Preferably, said second radial sliding guides have a second predetermined axial position.

Preferably, said second radial sliding guides are arranged on the axially opposite side to said plurality of first radial sliding guides with reference to said transverse mid-plane of the drum.

Preferably, each of said first angular sectors is fixedly associated with a respective first radial sliding guide.

Preferably, each of said second angular sectors is fixedly associated with a respective second radial sliding guide.

The aforementioned first radial sliding guides and second radial sliding guides, having respective predetermined axial positions and being associated with the first angular sectors and with the second angular sectors, respectively, prevent the axial movement of the first angular sectors and of the second angular sectors, which are thus forced to slide with the respective sliding blocks on the respective inclined sliding guides, in this way obtaining the radial expansion and contraction of the drum.

Preferably, a plurality of levers is provided, the levers extending parallel to said rotation axis. Such levers carry out the turning of the end edges of the carcass ply(ies) around the bead cores.

Preferably, said levers are movable along respective radial directions.

Preferably, said levers are movable parallel to said rotation axis.

In preferred embodiments, said levers are movable both along respective radial directions and along a direction parallel to said rotation axis.

Therefore, the movement of the aforementioned levers does not have angular components with respect to the aforementioned axial and radial directions. This leads to important advantages in terms of safety. Indeed, the Applicant has observed that even when the aforementioned levers are not driven to carry out the turning of the carcass ply(ies) they could still move by means of possible residual energy. In this case, possible angular components would lead to a guillotine movement of the aforementioned levers, with consequent high risks for the operators.

Preferably, said levers comprise, at first free ends thereof, respective elastic elements extending along a circumferential direction.

Preferably, each of said elastic elements is connected to the circumferentially consecutive elastic element. Thanks to these elastic elements the aforementioned levers always remain connected to one another both during the expansion/contraction of the drum and during the turning of the end edges of the carcass ply(ies) around the bead cores.

Preferably, a plurality of rigid tubular elements is provided, the rigid tubular elements extending along said circumferential direction.

Preferably, each of said tubular elements is connected to two circumferentially consecutive elastic elements. The aforementioned tubular elements allow to achieve an optimal mutual connection of the aforementioned elastic elements, and thus of the aforementioned levers.

Preferably, a second moving device which acts on said levers is provided.

Preferably, said second moving device comprises a second actuator.

Preferably, said plurality of levers comprises a plurality of first levers arranged on one side with respect to a transverse mid-plane of the drum.

Preferably, said plurality of levers comprises a plurality of second levers arranged on the axially opposite side to said plurality of first levers with respect to said transverse mid-plane.

Preferably, said first levers are movable upon command of said second actuator.

Preferably, said second levers are movable upon command of said second actuator.

Preferably, a plurality of third radial sliding guides arranged on one side with respect to said transverse mid-plane of the drum is provided.

Preferably, a plurality of fourth radial sliding guides arranged on the opposite side to said plurality of third radial sliding guides with reference to said transverse mid-plane is provided.

Preferably, each of said third radial sliding guides is associated with a respective lever of said first levers.

Preferably, each of said fourth radial sliding guides is associated with a respective lever of said second levers.

Preferably, each of said levers is associated, at the respective radial sliding guide, with a respective return spring extending along a respective substantially radial direction. Such return springs allow, in a constructively simple and functionally efficient manner, the aforementioned levers to go back to the radial position taken by each of them before being moved to carry out the turning of the end edges of the carcass ply(ies) around the bead cores.

Preferably, a first safety device is provided, the first safety device being configured to lock the radial movement of said drum upon detecting an anomaly signal. Such a provision further increases the safety level of the environment in which the drum of the invention is arranged.

Preferably, at least one second safety device is provided, the second safety device being configured to lock the movement of said levers upon detecting an anomaly signal. Such a provision increases the safety level of the environment in which the drum of the invention is arranged.

Preferably, radially moving said first angular sectors and second angular sectors comprises simultaneously moving said first angular sectors and second angular sectors at different speeds. The difference in speed between the first angular sectors and the second angular sectors results, over the same time, in a different radial stroke between first angular sectors and second angular sectors, so as to allow the second angular sectors to reach the desired position with respect to the first angular sectors both in the drum expanded configuration (second angular sectors circumferentially adjacent to the first angular sectors) and in the drum contracted configuration (second angular sectors arranged in a radially inner position with respect to the first angular sectors).

Preferably, radially moving said first angular sectors and second angular sectors comprises simultaneously subjecting said first angular sectors and second angular sectors to a same predetermined axial force. In this way, it is possible to obtain the different radial stroke of the first angular sectors and of the second angular sectors for the same axial movement thereof.

Preferably, there is the possibility of locking the radial movement of said drum upon detecting an anomaly signal.

Further features and advantages of the present invention will become clearer from the following detailed description of a preferred embodiment thereof, made with reference to the attached drawings.

In such drawings:
- figure 1 is a schematic side view of a drum in accordance with the present invention, such a drum being illustrated in a first operative configuration thereof (contracted configuration);
- figure 2 is a schematic side view of the drum of figure 1 illustrated in a second operative configuration thereof (expanded configuration);
- figure 3 is a schematic side view of the drum of figure 1 illustrated in a further operative configuration thereof temporally following that of figure 2;
- figure 4 is a schematic view of a radial half-section of the drum of figure 1;
- figure 5 is a schematic perspective view of the drum of figure 1 with some components thereof removed in order to better illustrate other components thereof that are at least partially hidden by the removed components;
- figure 6 is a schematic perspective view of an axially central portion of the drum illustrated in figure 5;
- figure 7 is a schematic perspective view of the axially central portion of the drum of figure 1 in which some of the components that in figure 5 have been removed are now illustrated and other components illustrated in figure 5 are now removed;
- figure 8 is a schematic side view of the axially central portion of the drum illustrated in figure 5 with further components thereof removed in order to better illustrate other components partially hidden by such further removed components;
- figures 9-22 schematically illustrate different possible constructive schemes of examples of tyres that can be built using the drum of figure 1.

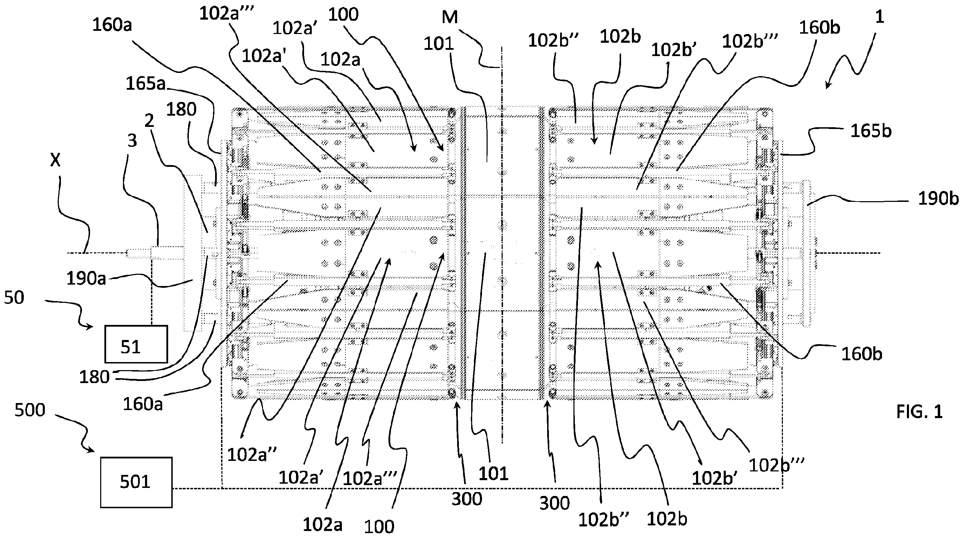

In figures 1-5, reference numeral 1 wholly indicates a drum for building a tyre for two-wheeled vehicles in accordance with the present invention.

In particular, the drum 1 is used to build a green tyre for bicycles (preferably racing bicycles but also other types of bicycles, like for example mountain bikes), motorbikes or motorcycles.

Preferably, in the case of building of green tyres for bicycles, the deposition of one or more carcass plies, the positioning of the bead cores on the carcass ply(ies), the turning of the end edges of the carcass ply(ies) around the bead cores and the deposition of the tread band preferably occurs on the drum 1.

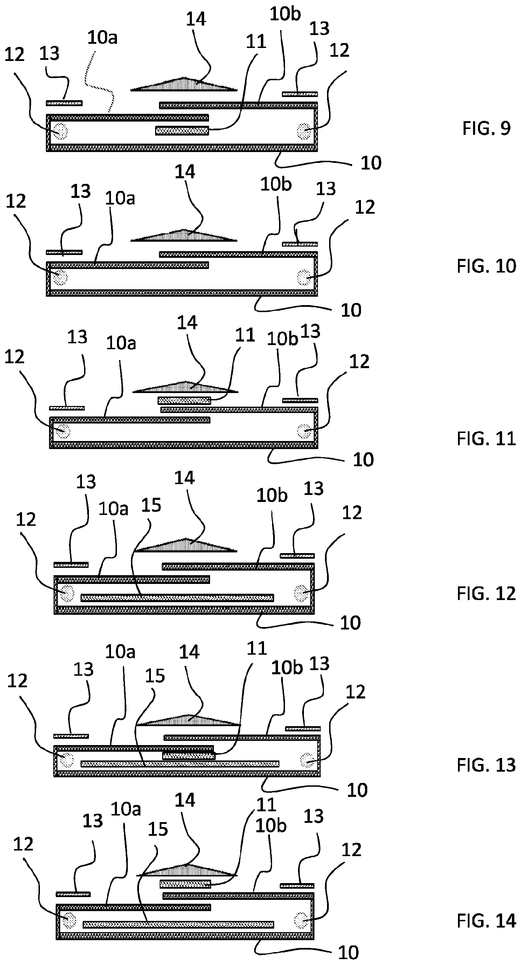

On the drum 1 it is also possible to deposit further structural components (chafer, breaker, cap, etc..), as discussed below with reference to figure 9-20.

On the other hand, in the case of building of green tyres for motorcycles, preferably at first the carcass structure of the green tyre (possibly after the deposit of a liner) and, subsequently, the crown structure is built on the drum 1. The latter can, however, be built on a different drum and then be brought into a radially outer position with respect to the carcass structure on the drum 1 to proceed with the assembly of the carcass structure at the crown structure.

The drum 1 comprises a hollow shaft 2 extending along an axis X, which defines the rotation axis of the drum 1.

The drum 1 has a transverse mid-plane M orthogonal to the rotation axis X.

A stem 3 is arranged inside the shaft 2.

The stem 3 is axially slidable with respect to the shaft 2 upon command of an actuator 51.

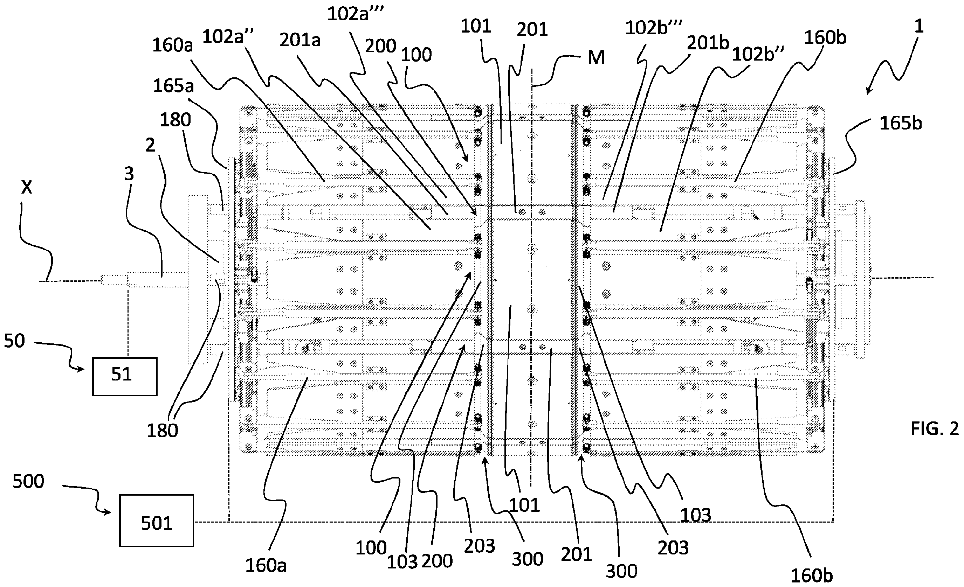

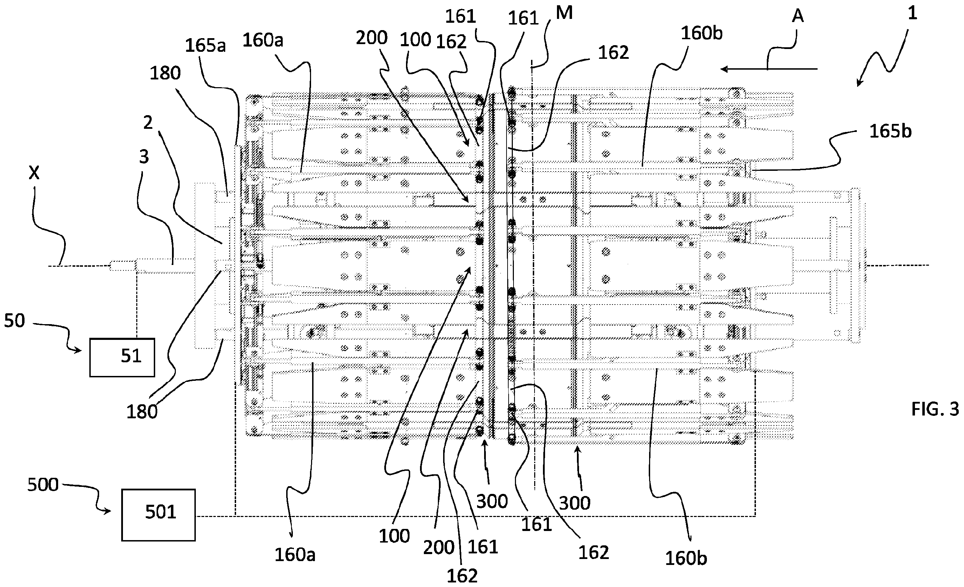

The actuator 51 is part of a moving device 50 configured to radially expand and contract the drum 1, so as to pass from a contracted configuration illustrated in figure 1 (corresponding to the configuration of maximum radial contraction of the drum 1) to an expanded configuration illustrated in figures 2 and 3 (corresponding to the configuration of maximum radial expansion of the drum 1).

A plurality of first angular sectors 100, illustrated in figures 1-3, is provided in a radially outer position with respect to the shaft.

In the specific example illustrated herein, eight first angular sectors 100 are provided.

The first angular sectors 100 are arranged coaxially to the shaft 2.

The first angular sectors 100 are equally angularly spaced apart from each other and can be moved radially between a respective first operative position in which the first angular sectors 100 are circumferentially adjacent to one another (figure 1) and a respective second operative position in which the first angular sectors 100 are circumferentially spaced apart from one another (figure 2).

The radial movement of the first angular sectors 100 is driven by the actuator 51 by the axial movement of the stem 3, as described below.

With reference to figure 1, each first angular sector 100 comprises a respective central portion 101 arranged astride of the transverse mid-plane M and two respective side portions 102a, 102b arranged on axially opposite sides with respect to the central portion 101.

Each side portion 102a, 102b comprises a main part 102a', 102b' and two secondary parts 102a", 102b" and 102a'", 102b‴ arranged on circumferentially opposite sides with respect to the main part 102a'.

The side portions 102a, 102b are elongated in the axial direction so as to provide an adequate support for the carcass ply(ies) deposited on the drum 1.

By replacing only the central portions 101 with others of different length it is possible to build on the drum 1 green tyres of different width, so as to allow the building on the drum 1 of tyres having a low width, like for example those for racing bicycles, tyres having a high width, like for example those for high-powered motorcycles, and tyres having intermediate widths, like for example those for mountain bikes or motorbikes.

With reference to figures 2-4, a plurality of second angular sectors 200 is provided in a radially outer position with respect to the shaft 2.

In the specific example illustrated herein, eight second angular sectors 200 are provided.

The second angular sectors 200 are arranged coaxially to the shaft 2.

The second angular sectors 200 are equally angularly spaced apart from each other and can be moved radially between a respective first operative position in which the second angular sectors 200 are circumferentially adjacent to one another and arranged in a radially inner position with respect to the first angular sectors 100 (in figure 1 the second angular sectors 200 are not visible since they are hidden by the first angular sectors 100) and a respective second operative position in which the second angular sectors 200 are circumferentially spaced apart from one another and each of them is circumferentially adjacent to, and arranged between, two respective first angular sectors 100 (figures 2 and 3).

The radial movement of the second angular sectors 200 is also driven by the actuator 51 by the axial movement of the stem 3, as described below.

Preferably, the radial movement of the second angular sectors 200 is simultaneous with that of the first angular sectors 100.

Each second angular sector 200 has axial and circumferential dimensions smaller than those of the first angular sectors 100.

Preferably, each second angular sector 200 extends axially for a segment having a length greater than the axial length of the central portion 101 of the first angular sectors 100.

With reference to figure 2, when the drum 1 is in the expanded configuration thereof, a central portion 201 of each second angular sector 200 is in a position circumferentially interposed between the central portions 101 of two circumferentially consecutive first angular sectors 100 and the side portions 201a, 201b of each second angular sector 200 arranged on axially opposite sides with respect to the aforementioned central portion 201 are each in a position circumferentially interposed, respectively, between the secondary parts 102a", 102a‴ and 102b", 102b‴ of the side portions 102a, 102b of two circumferentially consecutive first angular sectors 101.

With reference to figure 2, each first angular sector 100 comprises, on axially opposite sides with respect to the central portion 101, a respective circumferential groove 103.

Similarly, each second angular sector 200 comprises, on axially opposite sides with respect to the central portion 201, a respective circumferential groove 203.

When the drum 1 is in the expanded configuration thereof, illustrated in figures 2 and 3, the circumferential grooves 103, 203 of all of the first angular sectors 100 and of all of the second angular sectors 200 define two bead core housing annular seats 300 that are substantially continuous in the circumferential direction. Each of said annular seats 300 is arranged on the axially opposite side to the other with respect to the central portions 101, 201 of the first angular sectors 100 and of the second angular sectors 200.

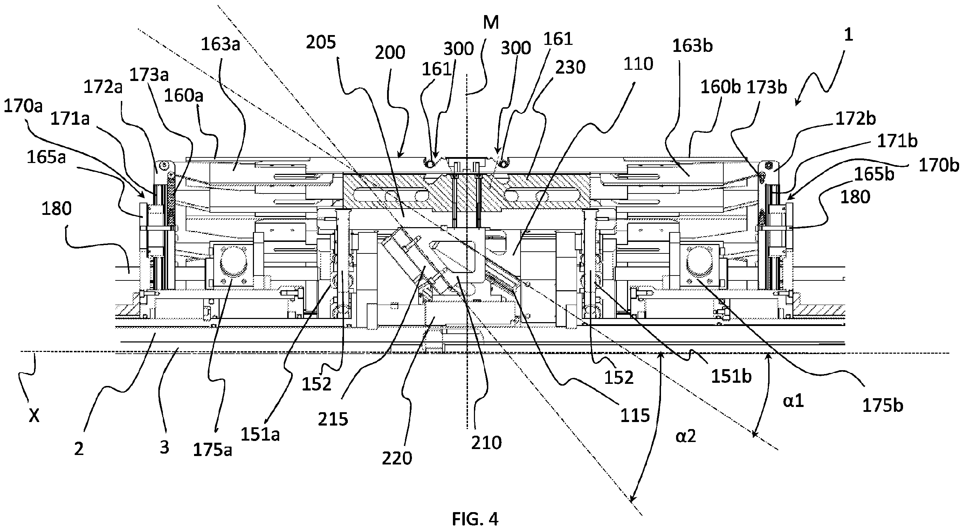

The aforementioned annular seats 300 are also illustrated in figure 4.

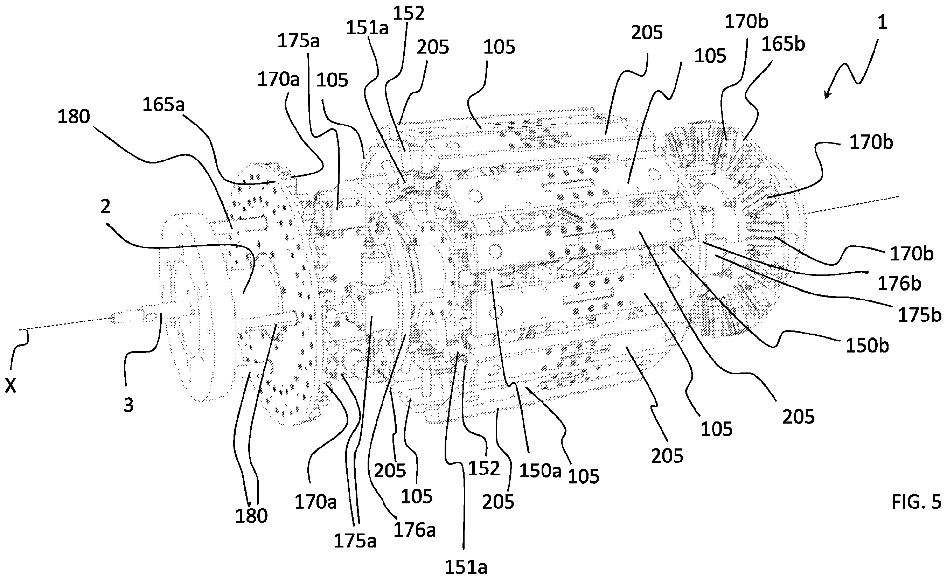

With particular reference to figures 5-8, each angular sector 100, 200 is supported by a respective support element 105, 205 which is arranged parallel to the rotation axis X.

Each support element 105, 205 is substantially parallelepiped in shape, with the longer sides oriented parallel to the rotation axis X.

Each support element 105, 205 is fixedly coupled with a respective sliding block 110, 210.

Each sliding block 110 is slidably associated with a respective inclined sliding guide 115.

Each sliding block 210 is slidably associated with a respective inclined sliding guide 215.

Each inclined sliding guide 115 is fixedly coupled with a bush 120.

Each inclined sliding guide 215 is fixedly coupled with a bush 220.

The bushes 120, 220 are adjacent to one another. Both these bushes 120, 220 are slidably fitted onto the shaft 2 and fixedly associated with the stem 3, so as to slide axially on the shaft 2 following the axial sliding of the stem 3 inside the shaft 2.

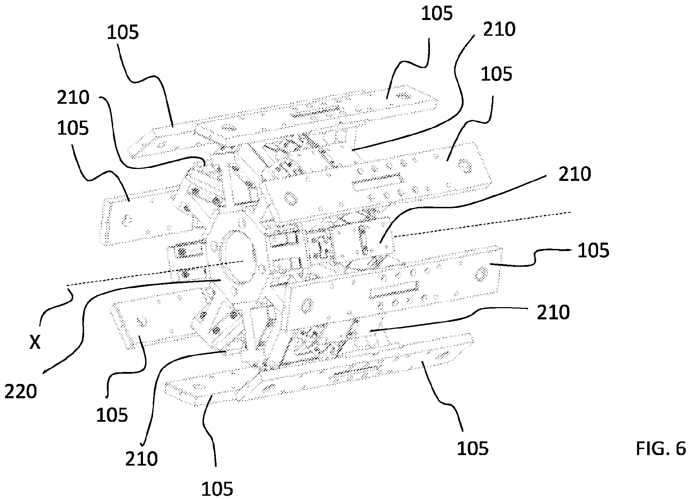

Figure 6 illustrates the support elements 105 of the first angular sectors 100 whereas the support elements 205 of the second angular sectors 200 have been removed, making the sliding blocks 210 of the second angular sectors 200 visible.

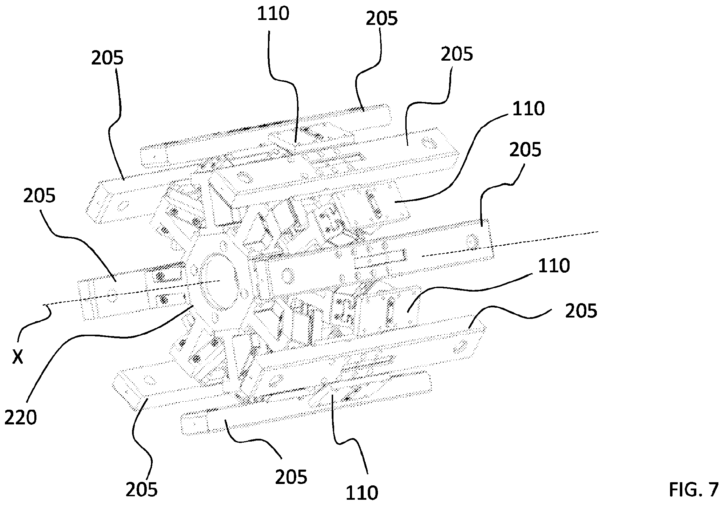

Vice-versa, figure 7 illustrates the support elements 205 of the second angular sectors 200 whereas the support elements 105 of the first angular sectors 100 have been removed, making the sliding blocks 110 of the first angular sectors 100 visible.

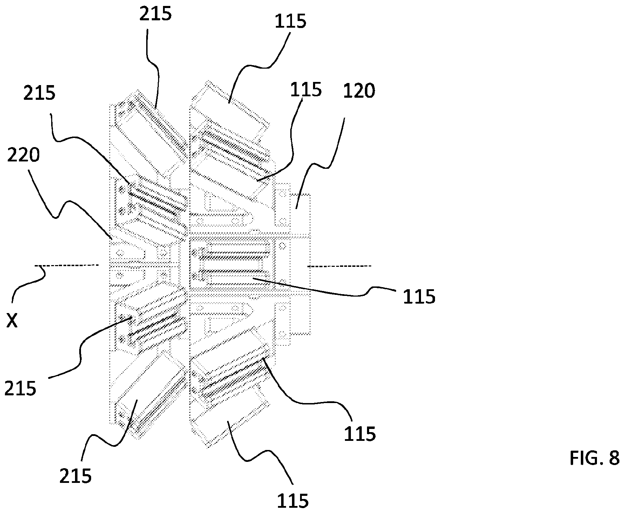

The inclined sliding guides 115 on which the sliding blocks 110 of the first angular sectors 100 slide and the inclined sliding guides 215 on which the sliding blocks 210 of the second angular sectors 200 slide are all illustrated in figure 8.

As illustrated in figure 4, the sliding blocks 110 and the inclined sliding guides 115 are inclined with respect to the rotation axis X by a first angle α1, whereas the sliding blocks 210 and the inclined sliding guides 215 are inclined with respect to the rotation axis X by a second angle α2 greater than the first angle α1.

Again with reference to figure 4, in the case in which the radially outer diameter of the drum 1 in the expanded configuration thereof is smaller than the fitting diameter of the green tyre to be built, a spacer is arranged radially between each angular sector 100, 200 and the respective support element 105, 205, said spacer having a radial size such that the radially outer diameter of the drum 1 equals the fitting diameter. In figure 4 it is possible to see a spacer 230 radially arranged between a second angular sector 200 and the respective support element 205.

By replacing only the aforementioned spacers with others of different radial size it is possible to build on the same drum 1 tyres having a low fitting diameter, like for example those for motorbikes or motorcycles, tyres having a high fitting diameter, like for example those for racing bicycles or mountain bikes, and tyres having an intermediate fitting diameter.

As illustrated in figure 5, each support element 105, 205 is coupled, at the free axial end portions thereof, with respective flanges 150a, 150b.

The flanges 150a, 150b are fitted on the shaft 2 at respective predetermined axial positions on axially opposite sides with respect to the transverse mid-plane M of the drum 1.

Each flange 150a, 150b comprises a radial sliding guide 151a, 151b inside which a support rod 152 slides, the support rod 152 being constrained to a respective free axial end portion of a respective support element 105, 205.

The radial movement of the support rod 152 results in the radial movement, preferably simultaneous, of the support elements 105, 205 (and therefore of the angular sectors 100, 200) during the radial expansion/contraction of the drum 1.

A first safety device (not illustrated) is provided. The first safety device is configured to lock the radial movement of the drum 1 upon detecting an anomaly signal.

The first safety device is preferably a pneumatic device that, when it is activated, allows the radial movement of the first angular sectors 100 and of the second angular sectors 200 and that, when it is deactivated, for example upon detecting an anomaly signal, locks the radial movement of the first angular sectors 100 and of the second angular sectors 200.

Preferably, eight first safety devices are provided, four at each side with respect to the transverse mid-plane M.

With reference to figures 1-4, the drum 1 comprises a plurality of first levers 160a arranged on one side with respect to the transverse plane of symmetry M and a plurality of second levers 160b arranged on the axially opposite side of the levers 160a with respect to the transverse plane of symmetry M.

Each lever 160a, 160b extends parallel to the rotation axis X and is used to carry out the turning of the end edges of the carcass ply(ies) around the bead cores.

With reference to figures 3 and 4, each lever 160a, 160b has, at a respective free end thereof that is proximal to the transverse mid-plane M (and thus to the circumferential grooves 103, 203 that define the annular seats 300) when the drum 1 is in the operative configurations of figures 1 and 2, a respective elastic element 161 (which in the example illustrated herein is a traction spring) extending in the circumferential direction.

Each elastic element 161 is connected to the circumferentially consecutive elastic element 161 through a respective rigid tubular element 162 also extending in the circumferential direction.

With reference to figures 1-3, each lever 160a is associated with a flange 165a arranged on one side with respect to the transverse mid-plane M in an axially outer position with respect to the flange 150a.

Similarly, each lever 160b is associated with a flange 165b arranged on the axially opposite side to the flange 165a with respect to the transverse mid-plane M in an axially outer position with respect to the flange 150b (figures 1-3).

The flanges 165a, 165b are axially movable upon command of an actuator 501. During the axial movement of each flange 165a, 165b towards the transverse mid-axis M of the drum the turning of the respective end edge of the carcass ply around the respective bead core is carried out.

The actuator 501 is part of a moving device 500 configured to move the levers 160a, 160b at first radially and, then, axially towards the transverse mid-plane M of the drum 1, to turn the end edges of the carcass ply(ies) around the bead cores, and away from the transverse mid-plane M, when turning is complete.

In figure 3 it is possible to see the flange 165b which the levers 160b are constrained to that has been moved axially towards the transverse mid-plane M (arrow A), simulating the movement necessary to carry out the turning of an end edge of the carcass ply(ies) around the respective bead core.

As illustrated in figure 4, each lever 160a, 160b is slidably constrained to a respective cam 163a, 163b configured so as to impart the desired radial and axial movement to the lever 160a, 160b.

With reference to figures 4 and 5, each flange 165a, 165b comprises a plurality of radial sliding guides 170a, 170b inside which respective rods 171a, 171b slide.

On the radially outer end of each rod 171a, 171b a respective plate 172a, 172b is provided, which the cam 163a, 163b is hinged to.

A return spring 173a, 173b is connected to each plate 172a, 172b. The return spring 173a, 173b extends along a respective substantially radial direction and exerts a contrast action to the radial movement of the rods 171a, 171b (and thus of the levers 160a, 160b) driven by the actuator 501.

With reference to figures 1-5, the flanges 165a, 165b slide axially along a plurality of crossbars 180 extending parallel to the rotation axis X between two end flanges 190a, 190b (figure 1). In the specific example illustrated here, four crossbars 180 are provided.

With reference to figures 4 and 5, a second safety device 175a, 175b configured to lock the movement of the flanges 165a, 165b upon detecting an anomaly signal is mounted on each crossbar 180.

The second safety device 175a, 175b is preferably a pneumatic device that, when activated, allows the axial movement of the flanges 165a, 165b (and consequently of the levers 160a, 160b) and that, when deactivated, for example upon detecting an anomaly signal, does not allow the flanges 165a, 165b to slide axially.

Preferably, eight second safety devices 175a, 175b are provided, four at each flange 165a, 165b. A safety device 175a and a safety device 175b is mounted on each crossbar 180: the safety device 175a is axially arranged between the flange 165a and the flange 150a and the safety device 175b is axially arranged between the flange 165b and the flange 150b.

With reference to figure 5, the safety devices 175a are mounted on a flange 176a arranged in an axially inner position with respect to the flange 165a. Similarly, the safety devices 175b are mounted on a flange 176b arranged in an axially inner position with respect to the flange 165b, on the axially opposite side to the flange 176a with respect to the transverse mid-plane M of the drum 1.

The building of a green tyre through the drum 1 provides the geometry of the drum 1 to be controlled so that the drum 1 initially takes up a configuration of partial expansion (not illustrated) at which, inter alia, the deposition on the radially outer surface of the drum 1 of one or more carcass plies (possibly after deposition of a liner) and the positioning of the bead cores in a radially outer position with respect to the opposite end edges of the carcass ply(ies), at the annular seats 300, occurs. In such an operative configuration:
- the second angular sectors 200 are in a radially inner position with respect to the first angular sectors 100;
- the diameter defined by the radially outer surface of the drum 1 (corresponding to the radially outer surface of the first angular sectors 100) is smaller than the fitting diameter of the tyre to be built;
- the bead cores are not housed in the annular seats 300 and the latter are not continuous in the circumferential direction. In particular, they have some gaps in the circumferential direction, each gap being defined between two circumferentially consecutive first angular sectors 100.

Thereafter, the geometry of the drum 1 is controlled so that the drum 1 takes up a configuration of complete expansion (illustrated in figures 2 and 3) at which:
- the second angular sectors 200 are circumferentially adjacent to the first angular sectors 100;
- each of the aforementioned gaps is occupied by a respective second annular sector 200;
- the radially outer surface of the drum 1 (corresponding to the radially outer surface of the first angular sectors 100 and of the second angular sectors 200) reaches the desired fitting diameter;
- the bead cores are housed in the annular seats 300 in order to proceed then with the turning of the end edges of the carcass ply(ies) around the bead cores;
- the annular seats 300 are substantially continuous in the circumferential direction.

Finally, the geometry of the drum 1 is controlled so that the drum 1 takes up a configuration of maximum contraction (illustrated in figure 1) in which the built green tyre can be withdrawn from the drum 1. In such an operative configuration the second angular sectors 200 are in a radially inner position with respect to the first angular sectors 100.

The radial movement of the first angular sectors 100 and of the second angular sectors 200 is preferably simultaneous. Such a movement is driven by the actuator 51, which moves the stem 3 subjecting the bushes 120, 220 to a same axial force.

Thanks to the greater inclination of the inclined sliding guides 215 and of the sliding blocks 210 with respect to the inclined sliding guides 115 and to the sliding blocks 110, the second angular sectors 200 move with a speed greater than that of the first angular sectors 100, reaching the first angular sectors 100 when the drum 1 is completely expanded and being arranged in a radially inner position with respect to the first angular sectors 100 when the drum 1 is contracted.

Upon detecting an anomaly signal, the first safety device locks the radial movement of the first angular sectors 100 and of the second angular sectors 200.

In the completely expanded configuration illustrated in figures 2 and 3, once the bead cores are housed in the annular seats 300 the actuator 501 drives the axial movement of the flanges 165a, 165b and consequently, the radial and axial movement of the levers 160a, 160b to turn the end edges of the carcass ply(ies) around the bead cores.

In the building of a tyre for motorcycles, the turns at the two opposite end edges of the carcass ply(ies) take place preferably simultaneously.

In the building of a tyre for bicycles, the turns at the two opposite end edges of the carcass ply(ies) preferably take place in sequence, i.e. firstly one end edge is turned through the levers 160a (o 160b) and then the other end edge is turned through the levers 160b (or 160a).

With the drum 1 of the invention it is possible to pass for example from a configuration suitable for building a bicycle tyre to a configuration suitable for building a motorcycle tyre by simply replacing the levers 160a, 160b (in the case of a motorcycle tyre levers 160a, 160b of shorter length are used), possibly by replacing or not using the spacers 161 and by replacing the central portions 101 of the first angular sectors 100 (in the case of a motorcycle tyre central portions 101 of shorter length are used). It is not necessary to replace further structural components. An universal core for all of the fitting diameters and for all of the widths of the tyres and a set of replaceable components as a function of the specific tyre to be built are thus provided. The number of replaceable components is however low.

The drum 1 makes it possible for example to build a bicycle tyre having a weight comprised between about 0.1 Kg and about 1.5 Kg, a diameter of the bead core comprised between about 550 mm and about 630 mm and a width (of the green tyre) comprised between about 40 mm and about 300 mm.

After replacement of the aforementioned components, the drum 1 also makes it possible, for example, to build a motorcycle tyre having a weight comprised between about 1 Kg and about 10 Kg, a diameter of the bead core comprised between about 350 mm and about 500 mm and a width (of the green tyre) comprised between about 120 mm and about 300 mm.

In the specific case of a bicycle tyre, the green tyre built with the drum 1 of the present invention preferably has the constructive scheme illustrated in figure 9. Such constructive schemes can however be provided also in the case of a motorcycle or motorbike tyre.

With reference to figure 9, the tyre in such a case comprises a single carcass ply 10 (single-ply tyre) whose axial end edges 10a, 10b are turned around the bead cores 12 partially overlapping one another at an axially central portion of the tyre.

In a radially outer position with respect to the carcass ply 10, an anti-perforation reinforcing layer 11, commonly known as "breaker" is provided. The anti-perforation reinforcing layer 11 is deposited on the carcass ply 10 before carrying out the turning of the end edges 10a, 10b thereof. The anti-perforation reinforcing layer 11 has an axial extension shorter than the axial distance between the two bead cores 12 and substantially comparable to that of the aforementioned axially central portion of the tyre. The anti-perforation reinforcing layer 11, therefore, is not turned around the bead cores 12.

The anti-perforation reinforcing layer 11 is for example a square fabric arranged at about 45° with respect to the axial or circumferential direction.

In a radially outer position with respect to each turned axial end edge 10a, 10b, an anti-abrasion element 13 commonly known as "chafer" is applied, at the respective bead core 12, which could however also not be present.

In a radially outer position with respect to the aforementioned axially central portion of the tyre, a tread band 14 is provided.

Figures 10-16, 21 and 22 schematically show possible alternative embodiments of a single-ply tyre in accordance with the present invention.

The constructive scheme of figure 10 differs from that of figure 9 only in that it does not comprise the anti-perforation reinforcing layer 11 (breaker).

The constructive scheme of figure 11 differs from that of figure 9 only in that the anti-perforation reinforcing layer 11 (breaker) is deposited on the carcass ply 10 after having carried out the turning of the end edges 10a, 10b thereof. The anti-perforation reinforcing layer 11 is thus arranged in a radially outer position with respect to the mutually overlapping end edges 10a, 10b.

The constructive scheme of figure 12 differs from that of figure 9 both in that it does not comprise the anti-perforation reinforcing layer 11 (like the constructive scheme of figure 10) and in that it comprises a cap 15. The cap 15 is deposited on the carcass ply 10 before carrying out the turning of the end edges 10a, 10b thereof and has an axial extension slightly shorter than the axial distance between the two bead cores 12. The cap 15, therefore, is not turned around the bead cores 12.

The constructive scheme of figure 13 is a combination of the constructive scheme of figure 9 and of the constructive scheme of figure 12. The anti-perforation reinforcing layer 11 is arranged in a radially inner position with respect to the turned edges of the carcass ply 10.

The constructive scheme of figure 14 is a combination of the constructive scheme of figure 11 and of the constructive scheme of figure 12.

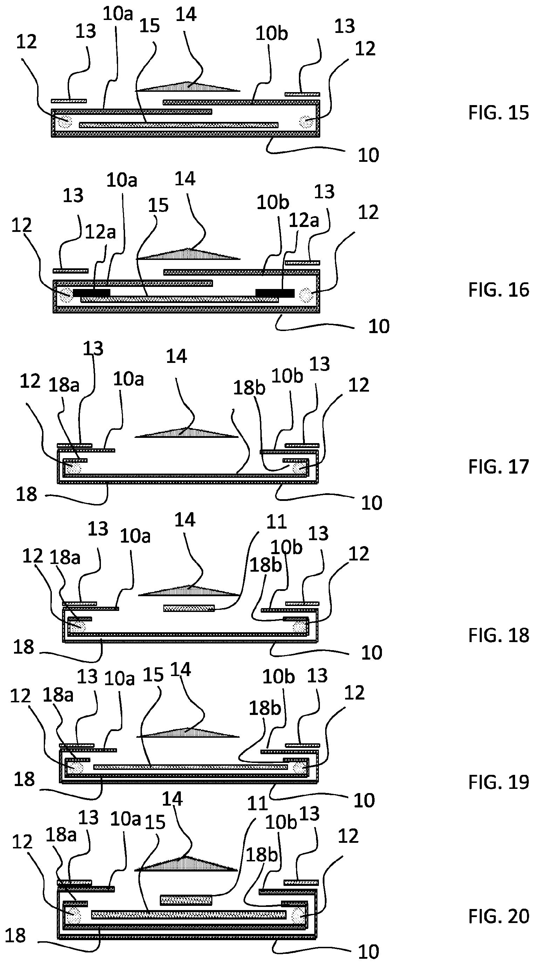

The constructive scheme of figure 15 is a combination of the constructive scheme of figure 10 and of the constructive scheme of figure 12.

The constructive scheme of figure 16 differs from that of figure 12 only in that it comprises a filler 12a at the bead cores 12. Such a constructive scheme is particularly preferred in the case of mountain bike tyres. The constructive scheme of figure 16 can also comprise two carcass plies.

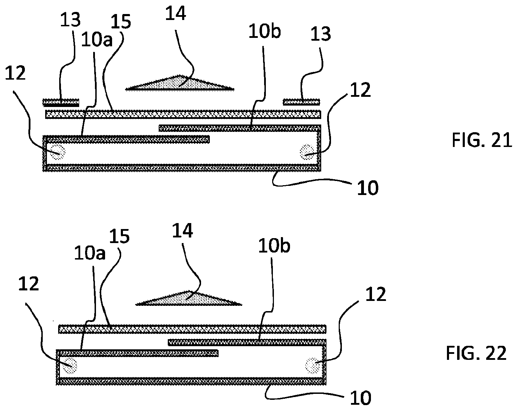

The constructive scheme of figure 21 differs from that of figure 12 only in that the cap 15 is deposited on the carcass ply 10 after having carried out the turning of the end edges 10a, 10b thereof and extends axially until it covers the turned end edges 10a, 10b of the carcass ply 10. In this case, the anti-abrasion elements 13 are arranged in a radially outer position with respect to the cap 15.

The constructive scheme of figure 22 differs from that of figure 21 only in that it does not comprise the anti-abrasion elements 13.

Figures 17-20 schematically show possible embodiments of a two-ply tyre in accordance with the present invention.

The constructive scheme of figure 17 differs from that of figure 10, as well as for the presence of a second carcass ply 18 arranged in a radially outer position with respect to the carcass ply 10 and in that the end edges 18a, 18b of the second carcass ply 18 are also turned around the bead cores 12, also in that the end edges 10a, 10b, and 18a, 18b turned around the bead cores 12 are axially spaced apart and in axial positions different from that of the tread band 14. The end edges 18a, 18b are in a radially inner position with respect to the end edges 10a, 10b and axially more spaced than the end edges 10a, 10b.

The constructive scheme of figure 18 differs from that of figure 17 only in that it comprises an anti-perforation reinforcing layer 11 (breaker) radially arranged between the carcass ply 18 and the tread band 14 and axially arranged between the end edges 10a, 10b.

The constructive scheme of figure 19 differs from that of figure 17 only in that it comprises a cap 15, like in the constructive scheme of figure 12.

The constructive scheme of figure 20 differs from that of figure 19 only in that it comprises, radially arranged between the cap 15 and the tread band 1, an anti-perforation reinforcing layer 11 (breaker).

The present invention has been described with reference to some preferred embodiments. Different modifications can be made to the embodiments described above, still remaining within the scope of protection of the invention, defined by the following claims.

## Claims

1. Drum (1) for building a tyre for two-wheeled vehicles, comprising:
- a shaft (2) extending coaxially to a rotation axis (X);
- a plurality of first angular sectors (100) arranged coaxially to said shaft (2) and radially movable between a respective first operative position in which said first angular sectors (100) are circumferentially adjacent to one another and said drum (1) is in a contracted configuration and a respective second operative position in which said first angular sectors (100) are circumferentially spaced apart from one another and said drum (1) is in an expanded configuration;
- a plurality of second angular sectors (200) arranged coaxially to said shaft (2) and radially movable between a respective first operative position in which said drum (1) is in said contracted configuration and said second angular sectors (200) are circumferentially adjacent to one another and arranged in a radially inner position with respect to said first angular sectors (100), and a respective second operative position in which said drum (1) is in said expanded configuration and said second angular sectors (200) are circumferentially spaced apart from one another and each of said second angular sectors (200) is circumferentially adjacent to, and arranged between, two respective first angular sectors (100);
wherein each of said first angular sectors (100) and second angular sectors (200) comprises at least one respective circumferential groove (103, 203) that, when said drum (1) is in said expanded configuration, defines, with the circumferential grooves (103, 203) of the other first angular sectors (100) and second angular sectors (200), at least one bead core housing annular seat (300) that is substantially continuous in the circumferential direction;
**characterised in that** each of said first angular sectors (100) is slidably associated with a respective first sliding block (110) inclined with respect to said rotation axis (X) by a first angle (α1) and each of said second angular sectors (200) is slidably associated with a respective second sliding block (210) inclined with respect to said rotation axis (X) by a second angle (α2) greater than said first angle (α1);
wherein said drum (1) comprises:
- a stem (3) arranged inside said shaft (2) and movable along a direction parallel to said rotation axis (X);
- a first bush (120) fixedly associated with said stem (3);
- a first inclined sliding guide (115) fixedly associated with said first bush (120) and inclined with respect to said rotation axis (X) by said first angle (α1);
- a second bush (220) fixedly associated with said stem (3);
- a second inclined sliding guide (215) fixedly associated with said second bush (220) and inclined with respect to said rotation axis (X) by said second angle (α2);
wherein said first sliding block (110) is slidably associated with said first inclined sliding guide (115) and said second sliding block (210) is slidably associated with said second inclined sliding guide (215);
wherein said first sliding block (110) is slidably associated through said first inclined sliding guide (115) only with said first bush (120) and said second sliding block (210) is slidably associated through said second inclined sliding guide (215) only with said second bush (220).

2. Drum (1) according to claim 1, comprising a first moving device (50) which acts on said first angular sectors (100) and second angular sectors (200) to move said first angular sectors (100) and second angular sectors (200) between said respective first operative positions and second operative positions, wherein said moving device (50) comprises a first actuator (51) associated with said first angular sectors (100) and second angular sectors (200) to simultaneously move said first angular sectors (100) and second angular sectors (200) between said respective first operative positions and second operative positions.

3. Drum (1) according to claim 1 or 2, comprising:
- a plurality of first radial sliding guides (151a) having a first predetermined axial position and arranged on one side with respect to a transverse mid-plane (M) of the drum (1);
- a plurality of second radial sliding guides (151b) having a second predetermined axial position and arranged on the axially opposite side to said plurality of first radial sliding guides with respect to said transverse mid-plane (M) of the drum (1);
wherein each of said first angular sectors (100) and second angular sectors (200) is fixedly associated with a respective first radial sliding guide (151a) and with a respective second radial sliding guide (151b), respectively.

4. Drum (1) according to any one of the previous claims, comprising a plurality of levers (160a, 160b) extending parallel to said rotation axis (X) and movable both along respective radial directions and along a direction parallel to said rotation axis (X).

5. Drum (1) according to claim 4, wherein said levers (160a, 160b) comprise, at first free ends thereof, respective elastic elements (161) extending along a circumferential direction and each connected to the circumferentially consecutive elastic element.

6. Drum (1) according to claim 5, comprising a plurality of rigid tubular elements (162) extending along said circumferential direction and each connected to two circumferentially consecutive elastic elements (161).

7. Drum (1) according to any one of claims 4 to 6, comprising a second moving device (500) which acts on said levers (160a, 160b).

8. Drum (1) according to claim 7, wherein said second moving device (500) comprises a second actuator (501) and said plurality of levers (160a, 160b) comprises a plurality of first levers (160a) arranged on one side with respect to a transverse mid-plane (M) of the drum (1) and a plurality of second levers (160b) arranged on the axially opposite side to said plurality of first levers (160a) with respect to said transverse mid-plane (M), wherein said first levers (160a) and second levers (160b) are movable upon command of said second actuator (501).

9. Drum (1) according to claim 8, comprising a plurality of third radial sliding guides (170a) arranged on one side with respect to said transverse mid-plane (M) of the drum (1) and a plurality of fourth radial sliding guides (170b) arranged on the opposite side to said plurality of third radial sliding guides (170a) with respect to said transverse mid-plane (M), wherein each of said third radial sliding guides (170a) is associated with a respective lever (160a) of said first levers (160a) and each of said fourth radial sliding guides (170b) is associated with a respective lever (160b) of said second levers (160b).

10. Drum (1) according to claim 8 or 9, wherein each of said levers (160a, 160b) is associated, at the respective radial sliding guide (170a, 170b), with a respective return spring (173a, 173b) extending along a respective substantially radial direction.

11. Drum (1) according to any one of claims 4 to 10, comprising at least one second safety device (175a, 175b) configured to lock the movement of said levers (160a, 160b) upon detecting an anomaly signal.

12. Method for controlling the geometry of a building drum (1) in a process for building a tyre for two-wheeled vehicles, the drum (1) comprising a plurality of first sliding blocks (110) and second sliding blocks (210) arranged around a shaft (2) extending coaxially to a rotation axis (X), said first sliding blocks (110) being inclined by a first angle (α1) with respect to said rotation axis (X) and said second sliding blocks (210) being inclined, with respect to said rotation axis (X), by a second angle (α2) greater than said first angle (α1), each first sliding block (110) being coupled to a respective first angular sector (100) having a respective circumferential groove (103) and each second sliding block (210) being coupled to a respective second angular sector (200) having a respective circumferential groove (203), said drum (1) further comprising:
- a stem (3) arranged inside said shaft (2) and movable along a direction parallel to said rotation axis (X);
- a first bush (120) fixedly associated with said stem (3);
- a first inclined sliding guide (115) fixedly associated with said first bush (120) and inclined with respect to said rotation axis (X) by said first angle (α1);
- a second bush (220) fixedly associated with said stem (3);
- a second inclined sliding guide (215) fixedly associated with said second bush (220) and inclined with respect to said rotation axis (X) by said second angle (α2);
wherein said first sliding block (110) is slidably associated with said first inclined sliding guide (115) and said second sliding block (210) is slidably associated with said second inclined sliding guide (215);
wherein said first sliding block (110) is slidably associated through said first inclined sliding guide (115) only with said first bush (120) and said second sliding block (210) is slidably associated through said second inclined sliding guide (215) only with said second bush (220);
the method comprising:
- radially moving the first angular sectors (100) and the second angular sectors (200) until an expanded configuration of said drum (1) is defined in which the first angular sectors (100) are circumferentially spaced apart from one another, each of the second angular sectors (200) is circumferentially adjacent to, and arranged between, two respective first angular sectors (100) and the circumferential grooves (103, 203) of said first angular sectors (100) and second angular sectors (200) define a bead core housing annular seat (300) that is substantially continuous in the circumferential direction;
- radially moving the first angular sectors (100) and the second angular sectors (200) until a contracted configuration of said drum (1) is defined in which the first angular sectors (100) are circumferentially adjacent to one another and the second angular sectors (200) are circumferentially adjacent to one another and arranged in a radially inner position with respect to the first angular sectors (100).

13. Method according to claim 12, wherein radially moving said first angular sectors (100) and second angular sectors (200) comprises simultaneously moving said first angular sectors (100) and second angular sectors (200) at different speeds.

14. Method according to claim 12 or 13, wherein radially moving said first angular sectors (100) and second angular sectors (200) comprises simultaneously subjecting said first angular sectors (100) and second angular sectors (200) to a same predetermined axial force.

15. Method according to any one of claims 12 to 14, comprising locking the radial movement of said drum (1) upon detecting an anomaly signal.

## Patentansprüche

1. Trommel (1) zur Fertigung eines Reifens für zweirädrige Fahrzeuge, umfassend:
- eine Welle (2), die sich koaxial mit einer Drehachse (X) erstreckt;
- eine Vielzahl von ersten Winkelsektoren (100), die koaxial mit der Welle (2) angeordnet und radial zwischen einer jeweiligen ersten Betriebsstellung, in welcher die ersten Winkelsektoren (100) in Umfangsrichtung zueinander benachbart sind und die Trommel (1) in einer kontrahierten Konfiguration ist, und einer jeweiligen zweiten Betriebsstellung, in welcher die ersten Winkelsektoren (100) in Umfangsrichtung voneinander beabstandet sind und die Trommel (1) in einer expandierten Konfiguration ist, beweglich sind;
- eine Vielzahl von zweiten Winkelsektoren (200), die koaxial mit der Welle (2) ausgerichtet sind und radial zwischen einer jeweiligen ersten Betriebsstellung, in welcher die Trommel (1) in der kontrahierten Konfiguration ist und die zweiten Winkelsektoren (200) in Umfangsrichtung zueinander benachbart und in einer radial inneren Position in Bezug auf die ersten Winkelsektoren (100) angeordnet sind, und einer jeweiligen zweiten Betriebsstellung, in welcher die Trommel (1) in der expandierten Konfiguration ist und die zweiten Winkelsektoren (200) in Umfangsrichtung voneinander beabstandet sind und jeder der zweiten Winkelsektoren (200) in Umfangsrichtung benachbart zu zwei jeweiligen ersten Winkelsektoren (100) und zwischen diesen angeordnet ist, beweglich sind;
wobei jeder der ersten Winkelsektoren (100) und zweiten Winkelsektoren (200) zumindest eine jeweilige umlaufende Nut (103, 203) umfasst, die, wenn die Trommel (1) in der expandierten Konfiguration ist, mit den umlaufenden Nuten (103, 203) der anderen ersten Winkelsektoren (100) und zweiten Winkelsektoren (200) zumindest einen den Wulstkern aufnehmenden ringförmigen Sitz (300) definiert, der in der Umfangsrichtung im Wesentlichen durchgängig ist;
**dadurch gekennzeichnet, dass** jeder der ersten Winkelsektoren (100) verschiebbar einem jeweiligen ersten Gleitblock (110) zugeordnet ist, der in Bezug auf die Drehachse (X) um einen ersten Winkel (α1) geneigt ist, und jeder der zweiten Winkelsektoren (200) verschiebbar einem jeweiligen zweiten Gleitblock (210) zugeordnet ist, der in Bezug auf die Drehachse (X) um einen zweiten Winkel (α2) geneigt ist, der größer als der erste Winkel (α1) ist;
wobei die Trommel (1) umfasst:
- einen Schaft (3), der innerhalb der Welle (2) angeordnet ist und entlang einer Richtung parallel zu der Drehachse (X) beweglich ist;
- eine erste Hülse (120), die dem Schaft (3) fest zugeordnet ist;
- eine erste geneigte Gleitführung (115), die der ersten Hülse (120) fest zugeordnet ist und in Bezug auf die Drehachse (X) um den ersten Winkel (α1) geneigt ist;
- eine zweite Hülse (220), die dem Schaft (3) fest zugeordnet ist;
- eine zweite geneigte Gleitführung (215), die der zweiten Hülse (220) fest zugeordnet ist und in Bezug auf die Drehachse (X) um den zweiten Winkel (α2) geneigt ist;
wobei der erste Gleitblock (110) verschiebbar der ersten geneigten Gleitführung (115) zugeordnet ist und der zweite Gleitblock (210) verschiebbar der zweiten geneigten Gleitführung (215) zugeordnet ist;
wobei der erste Gleitblock (110) durch die erste geneigte Gleitführung (115) nur der ersten Hülse (120) verschiebbar zugeordnet ist, und der zweite Gleitblock (210) durch die zweite geneigte Gleitführung (215) nur der zweiten Hülse (220) verschiebbar zugeordnet ist.

2. Trommel (1) nach Anspruch 1, umfassend eine erste Bewegungseinrichtung (50), die auf die ersten Winkelsektoren (100) und zweiten Winkelsektoren (200) wirkt, um die ersten Winkelsektoren (100) und die zweiten Winkelsektoren (200) zwischen den jeweiligen ersten Betriebsstellungen und zweiten Betriebsstellungen zu bewegen, wobei die Bewegungseinrichtung (50) ein erstes Stellglied (51) umfasst, das den ersten Winkelsektoren (100) und zweiten Winkelsektoren (200) zugeordnet ist, um gleichzeitig die ersten Winkelsektoren (100) und zweiten Winkelsektoren (200) zwischen den jeweiligen ersten Betriebsstellungen und zweiten Betriebsstellungen zu bewegen.

3. Trommel (1) nach Anspruch 1 oder 2, umfassend:
- eine Vielzahl von ersten radialen Gleitführungen (151a), die eine erste vorbestimmte axiale Stellung aufweisen und auf einer Seite in Bezug auf eine Quermittelebene (M) der Trommel (1) angeordnet sind;
- eine Vielzahl von zweiten radialen Gleitführungen (151b), die eine zweite vorbestimmte axiale Stellung aufweisen und auf der der Vielzahl von ersten radialen Gleitführungen axial entgegengesetzten Seite in Bezug auf die Quermittelebene (M) der Trommel (1) angeordnet sind;
wobei jeder der ersten Winkelsektoren (100) und der zweiten Winkelsektoren (200) jeweils einer jeweiligen ersten radialen Gleitführung (151a) und einer jeweiligen zweiten radialen Gleitführung (151b) fest zugeordnet ist.

4. Trommel (1) nach einem der vorhergehenden Ansprüche, umfassend eine Vielzahl von Hebeln (160a, 160b), die sich parallel zu der Drehachse (X) erstrecken und sowohl entlang jeweiliger radialer Richtungen als auch entlang einer Richtung parallel zu der Drehachse (X) beweglich sind.

5. Trommel (1) nach Anspruch 4, wobei die Hebel (160a, 160b) an ersten freien Enden davon jeweilige elastische Elemente (161) umfassen, die sich entlang einer Umfangsrichtung erstrecken und jeweils mit dem in Umfangsrichtung folgenden elastischen Element verbunden sind.

6. Trommel (1) nach Anspruch 5, umfassend eine Vielzahl von starren rohrförmigen Elementen (162), die sich entlang der Umfangsrichtung erstrecken und jeweils mit zwei in Umfangsrichtung folgenden elastischen Elementen (161) verbunden sind.

7. Trommel (1) nach einem der Ansprüche 4 bis 6, umfassend eine zweite Bewegungseinrichtung (500), die auf die Hebel (160a, 160b) wirkt.

8. Trommel (1) nach Anspruch 7, wobei die zweite Bewegungseinrichtung (500) ein zweites Stellglied (501) umfasst und die Vielzahl von Hebeln (160a, 160b) eine Vielzahl von ersten Hebeln (160a), die auf einer Seite in Bezug auf die Quermittelebene (M) der Trommel (1) angeordnet sind, und eine Vielzahl von zweiten Hebeln (160b) umfasst, die auf der der Vielzahl von ersten Hebeln (160a) axial entgegengesetzten Seite in Bezug auf die Quermittelebene (M) angeordnet sind, wobei die ersten Hebel (160a) und die zweiten Hebel (160b) unter Kontrolle des zweiten Stellglieds (501) beweglich sind.

9. Trommel (1) nach Anspruch 8, umfassend eine Vielzahl von dritten radialen Gleitführungen (170a), die auf einer Seite in Bezug auf die Quermittelebene (M) der Trommel (1) angeordnet sind, und eine Vielzahl von vierten radialen Gleitführungen (170b) umfasst, die auf der der Vielzahl von dritten radialen Gleitführungen (170a) axial entgegengesetzten Seite in Bezug auf die Quermittelebene (M) angeordnet sind, wobei jede der dritten radialen Gleitführungen (170a) einem jeweiligen Hebel (160a) der ersten Hebel (160a) zugeordnet ist und jede der vierten radialen Gleitführungen (170b) einem jeweiligen Hebel (160b) der zweiten Hebel (160b) zugeordnet ist.

10. Trommel (1) nach Anspruch 8 oder 9, wobei jeder der Hebel (160a, 160b) an der jeweiligen radialen Gleitführung (170a, 170b) einer jeweiligen Rückstellfeder (173a, 173b) zugeordnet ist, die sich entlang einer jeweiligen im Wesentlichen radialen Richtung erstreckt.

11. Trommel (1) nach einem der Ansprüche 4 bis 10, umfassend zumindest eine zweite Sicherungseinrichtung (175a, 175b), die dazu ausgestaltet ist, die Bewegung der Hebel (160a, 160b) nach Erfassung eines Anomaliesignals zu sperren.

12. Verfahren zur Steuerung der Geometrie einer Fertigungstrommel (1) in einem Verfahren zur Fertigung eines Reifens für zweirädrige Fahrzeuge, wobei die Trommel (1) eine Vielzahl von ersten Gleitblöcken (110) und zweiten Gleitblöcken (210) umfasst, die um eine Welle (2), die sich koaxial mit einer Drehachse (X) erstreckt, herum angeordnet sind, wobei die ersten Gleitblöcke (110) um einen ersten Winkel (α1) in Bezug auf die Drehachse (X) geneigt sind und die zweiten Gleitblöcke (210) in Bezug auf die Drehachse (X) um einen zweiten Winkel (α2) geneigt sind, der größer als der erste Winkel (α1) ist, wobei jeder erste Gleitblock (110) mit einem jeweiligen ersten Winkelsektor (100) gekoppelt ist, der eine jeweilige umlaufende Nut (103) aufweist, und jeder zweite Gleitblock (210) mit einem jeweiligen zweiten Winkelsektor (200) gekoppelt ist, der eine jeweilige umlaufende Nut (203) aufweist, wobei die Trommel (1) ferner umfasst:
- einen Schaft (3), der innerhalb der Welle (2) angeordnet ist und entlang einer Richtung parallel zu der Drehachse (X) beweglich ist;
- eine erste Hülse (120), die dem Schaft (3) fest zugeordnet ist;
- eine erste geneigte Gleitführung (115), die der ersten Hülse (120) fest zugeordnet ist und in Bezug auf die Drehachse (X) um den ersten Winkel (α1) geneigt ist;
- eine zweite Hülse (220), die dem Schaft (3) fest zugeordnet ist;
- eine zweite geneigte Gleitführung (215), die der zweiten Hülse (220) fest zugeordnet ist und in Bezug auf die Drehachse (X) um den zweiten Winkel (α2) geneigt ist;
wobei der erste Gleitblock (110) verschiebbar der ersten geneigten Gleitführung (115) zugeordnet ist und der zweite Gleitblock (210) verschiebbar der zweiten geneigten Gleitführung (215) zugeordnet ist;
wobei der erste Gleitblock (110) durch die erste geneigte Gleitführung (115) nur der ersten Hülse (120) verschiebbar zugeordnet ist, und der zweite Gleitblock (210) durch die zweite geneigte Gleitführung (215) nur der zweiten Hülse (220) verschiebbar zugeordnet ist);
wobei das Verfahren umfasst:
- radiales Bewegen der ersten Winkelsektoren (100) und der zweiten Winkelsektoren (200), bis eine expandierte Konfiguration der Trommel (1) definiert ist, in welcher die ersten Winkelsektoren (100) in Umfangsrichtung voneinander beabstandet sind, jeder der zweiten Winkelsektoren (200) in Umfangsrichtung zu zwei jeweiligen ersten Winkelsektoren (100) benachbart und zwischen diesen angeordnet ist und die umlaufenden Nuten (103, 203) der ersten Winkelsektoren (100) und zweiten Winkelsektoren (200) einen den Wulstkern aufnehmenden ringförmigen Sitz (300) definieren, der in der Umfangsrichtung im Wesentlichen durchgängig ist;
- radiales Bewegen der ersten Winkelsektoren (100) und der zweiten Winkelsektoren (200), bis eine kontrahierte Konfiguration der Trommel (1) definiert wird, in welcher die ersten Winkelsektoren (100) in Umfangsrichtung zueinander benachbart sind und die zweiten Winkelsektoren (200) in Umfangsrichtung zueinander benachbart und in einer radial inneren Position in Bezug auf die ersten Winkelsektoren (100) angeordnet sind.

13. Verfahren nach Anspruch 12, wobei das radiale Bewegen der ersten Winkelsektoren (100) und der zweiten Winkelsektoren (200) das gleichzeitige Bewegen der ersten Winkelsektoren (100) und der zweiten Winkelsektoren (200) mit unterschiedlichen Geschwindigkeiten umfasst.

14. Verfahren nach Anspruch 12 oder 13, wobei das radiale Bewegen der ersten Winkelsektoren (100) und der zweiten Winkelsektoren (200) das gleichzeitige Unterwerfen der ersten Winkelsektoren (100) und der zweiten Winkelsektoren (200) einer gleichen vorbestimmten axialen Kraft umfasst.

15. Verfahren nach einem der Ansprüche 12 bis 14, umfassend das Sperren der radialen Bewegung der Trommel (1) nach Erfassung eines Anomaliesignals.

## Revendications

1. Tambour (1) de fabrication d'un pneu pour véhicules à deux roues, comprenant :
- un arbre (2) s'étendant de manière coaxiale à un axe de rotation (X) ;
- une pluralité de premiers secteurs angulaires (100) agencés de manière coaxiale audit arbre (2) et mobiles radialement entre une première position de fonctionnement respective dans laquelle lesdits premiers secteurs angulaires (100) sont adjacents de manière circonférentielle les uns aux autres et ledit tambour (1) est dans une configuration contractée et une deuxième position de fonctionnement respective dans laquelle lesdits premiers secteurs angulaires (100) sont espacés de manière circonférentielle les uns des autres et ledit tambour (1) est dans une configuration déployée ;
- une pluralité de deuxièmes secteurs angulaires (200) agencés de manière coaxiale audit arbre (2) et mobiles radialement entre une première position de fonctionnement respective dans laquelle ledit tambour (1) est dans ladite configuration contractée et lesdits deuxièmes secteurs angulaires (200) sont adjacents de manière circonférentielle les uns aux autres et agencés dans une position radialement intérieure par rapport auxdits premiers secteurs angulaires (100) et une deuxième position de fonctionnement respective dans laquelle ledit tambour (1) est dans ladite configuration déployée et lesdits deuxièmes secteurs angulaires (200) sont espacés de manière circonférentielle les uns des autres et chacun desdits deuxièmes secteurs angulaires (200) est adjacent de manière circonférentielle à, et agencé entre, deux premiers secteurs angulaires respectifs (100) ;
dans lequel chacun desdits premiers secteurs angulaires (100) et deuxièmes secteurs angulaires (200) comprend au moins une rainure circonférentielle respective (103, 203) qui, lorsque ledit tambour (1) est dans ladite configuration déployée, définit, avec les rainures circonférentielles (103, 203) des autres premiers secteurs angulaires (100) et deuxièmes secteurs angulaires (200), au moins un siège annulaire de logement de tringle (300) qui est sensiblement continu dans la direction circonférentielle ;
**caractérisé en ce que** chacun desdits premiers secteurs angulaires (100) est associé de manière coulissante à un premier bloc coulissant respectif (110) incliné par rapport audit axe de rotation (X) d'un premier angle (α1) et chacun desdits deuxièmes secteurs angulaires (200) est associé de manière coulissante à un deuxième bloc coulissant respectif (210) incliné par rapport audit axe de rotation (X) d'un deuxième angle (α2) supérieur audit premier angle (α1) ;
dans lequel ledit tambour (1) comprend :
- une tige (3) agencée à l'intérieur dudit arbre (2) et mobile le long d'une direction parallèle audit axe de rotation (X) ;
- une première douille (120) associée de manière fixe à ladite tige (3) ;
- un premier guide coulissant incliné (115) associé de manière fixe à ladite première douille (120) et incliné par rapport audit axe de rotation (X) dudit premier angle (α1) ;
- une deuxième douille (220) associée de manière fixe à ladite tige (3) ;
- un deuxième guide coulissant incliné (215) associé de manière fixe à ladite deuxième douille (220) et incliné par rapport audit axe de rotation (X) dudit deuxième angle (α2) ;
dans lequel ledit premier bloc coulissant (110) est associé de manière coulissante audit premier guide coulissant incliné (115) et ledit deuxième bloc coulissant (210) est associé de manière coulissante audit deuxième guide coulissant incliné (215) ;
dans lequel ledit premier bloc coulissant (110) est associé de manière coulissante, par l'intermédiaire dudit premier guide coulissant incliné (115), uniquement à ladite première douille (120) et ledit deuxième bloc coulissant (210) est associé de manière coulissante, par l'intermédiaire dudit deuxième guide coulissant incliné (215), uniquement à ladite deuxième douille (220).

2. Tambour (1) selon la revendication 1, comprenant un premier dispositif de déplacement (50) qui agit sur lesdits premiers secteurs angulaires (100) et deuxièmes secteurs angulaires (200) pour déplacer lesdits premiers secteurs angulaires (100) et deuxièmes secteurs angulaires (200) entre lesdites premières positions de fonctionnement et deuxièmes positions de fonctionnement respectives, dans lequel ledit dispositif de déplacement (50) comprend un premier actionneur (51) associé auxdits premiers secteurs angulaires (100) et deuxièmes secteurs angulaires (200) pour déplacer simultanément lesdits premiers secteurs angulaires (100) et deuxièmes secteurs angulaires (200) entre lesdites premières positions de fonctionnement et deuxièmes positions de fonctionnement respectives.

3. Tambour (1) selon la revendication 1 ou 2, comprenant :
- une pluralité de premiers guides coulissants radiaux (151a) ayant une première position axiale prédéterminée et agencés sur un côté par rapport à un plan médian transversal (M) du tambour (1) ;
- une pluralité de deuxièmes guides coulissants radiaux (151b) ayant une deuxième position axiale prédéterminée et agencés sur le côté axialement opposé à ladite pluralité de premiers guides coulissants radiaux par rapport audit plan médian transversal (M) du tambour (1) ;
dans lequel chacun desdits premiers secteurs angulaires (100) et deuxièmes secteurs angulaires (200) est associé de manière fixe à un premier guide coulissant radial respectif (151a) et à un deuxième guide coulissant radial respectif (151b), respectivement.

4. Tambour (1) selon l'une quelconque des revendications précédentes, comprenant une pluralité de leviers (160a, 160b) s'étendant parallèlement audit axe de rotation (X) et mobiles à la fois le long de directions radiales respectives et le long d'une direction parallèle audit axe de rotation (X).

5. Tambour (1) selon la revendication 4, dans lequel lesdits leviers (160a, 160b) comprennent, à leurs premières extrémités libres, des éléments élastiques respectifs (161) s'étendant le long d'une direction circonférentielle et reliés chacun à l'élément élastique circonférentiellement consécutif.

6. Tambour (1) selon la revendication 5, comprenant une pluralité d'éléments tubulaires rigides (162) s'étendant le long de ladite direction circonférentielle et reliés chacun à deux éléments élastiques circonférentiellement consécutifs (161).

7. Tambour (1) selon l'une quelconque des revendications 4 à 6, comprenant un deuxième dispositif de déplacement (500) qui agit sur lesdits leviers (160a, 160b) .

8. Tambour (1) selon la revendication 7, dans lequel ledit deuxième dispositif de déplacement (500) comprend un deuxième actionneur (501) et ladite pluralité de leviers (160a, 160b) comprend une pluralité de premiers leviers (160a) agencés sur un côté par rapport à un plan médian transversal (M) du tambour (1) et une pluralité de deuxièmes leviers (160b) agencés sur le côté axialement opposé à ladite pluralité de premiers leviers (160a) par rapport audit plan médian transversal (M), dans lequel lesdits premiers leviers (160a) et deuxièmes leviers (160b) sont mobiles sur commande dudit deuxième actionneur (501).

9. Tambour (1) selon la revendication 8, comprenant une pluralité de troisièmes guides coulissants radiaux (170a) agencés sur un côté par rapport audit plan médian transversal (M) du tambour (1) et une pluralité de quatrièmes guides coulissants radiaux (170b) agencés sur le côté opposé à ladite pluralité de troisièmes guides coulissants radiaux (170a) par rapport audit plan médian transversal (M), dans lequel chacun desdits troisièmes guides coulissants radiaux (170a) est associé à un levier respectif (160a) desdits premiers leviers (160a) et chacun desdits quatrièmes guides coulissants radiaux (170b) est associé à un levier respectif (160b) desdits deuxièmes leviers (160b).

10. Tambour (1) selon la revendication 8 ou 9, dans lequel chacun desdits leviers (160a, 160b) est associé, au niveau du guide coulissant radial respectif (170a, 170b), à un ressort de rappel respectif (173a, 173b) s'étendant le long d'une direction sensiblement radiale respective.

11. Tambour (1) selon l'une quelconque des revendications 4 à 10, comprenant au moins un deuxième dispositif de sécurité (175a, 175b) configuré pour bloquer le mouvement desdits leviers (160a, 160b) lors de la détection d'un signal d'anomalie.

12. Procédé de contrôle de la géométrie d'un tambour de fabrication (1) dans un procédé de fabrication d'un pneu pour véhicules à deux roues, le tambour (1) comprenant une pluralité de premiers blocs coulissants (110) et de deuxièmes blocs coulissants (210) agencés autour d'un arbre (2) s'étendant de manière coaxiale à un axe de rotation (X), lesdits premiers blocs coulissants (110) étant inclinés d'un premier angle (α1) par rapport audit axe de rotation (X) et lesdits deuxièmes blocs coulissants (210) étant inclinés, par rapport audit axe de rotation (X), d'un deuxième angle (α2) supérieur audit premier angle (α1), chaque premier bloc coulissant (110) étant couplé à un premier secteur angulaire respectif (100) ayant une rainure circonférentielle respective (103) et chaque deuxième bloc coulissant (210) étant couplé à un deuxième secteur angulaire respectif (200) ayant une rainure circonférentielle respective (203), ledit tambour (1) comprenant en outre :
- une tige (3) agencée à l'intérieur dudit arbre (2) et mobile le long d'une direction parallèle audit axe de rotation (X) ;
- une première douille (120) associée de manière fixe à ladite tige (3) ;
- un premier guide coulissant incliné (115) associé de manière fixe à ladite première douille (120) et incliné par rapport audit axe de rotation (X) dudit premier angle (α1) ;
- une deuxième douille (220) associée de manière fixe à ladite tige (3) ;
- un deuxième guide coulissant incliné (215) associé de manière fixe à ladite deuxième douille (220) et incliné par rapport audit axe de rotation (X) dudit deuxième angle (α2) ;
dans lequel ledit premier bloc coulissant (110) est associé de manière coulissante audit premier guide coulissant incliné (115) et ledit deuxième bloc coulissant (210) est associé de manière coulissante audit deuxième guide coulissant incliné (215) ;
dans lequel ledit premier bloc coulissant (110) est associé de manière coulissante, par l'intermédiaire dudit premier guide coulissant incliné (115), uniquement à ladite première douille (120) et ledit deuxième bloc coulissant (210) est associé de manière coulissante, par l'intermédiaire dudit deuxième guide coulissant incliné (215), uniquement à ladite deuxième douille (220) ;
le procédé comprenant :
- le déplacement radial des premiers secteurs angulaires (100) et des deuxièmes secteurs angulaires (200) jusqu'à ce qu'une configuration déployée dudit tambour (1) soit définie dans laquelle les premiers secteurs angulaires (100) sont espacés de manière circonférentielle les uns des autres, chacun des deuxièmes secteurs angulaires (200) est adjacent de manière circonférentielle à, et agencé entre, deux premiers secteurs angulaires (100) respectifs et les rainures circonférentielles (103, 203) desdits premiers secteurs angulaires (100) et deuxièmes secteurs angulaires (200) définissent un siège annulaire de logement de tringle (300) qui est sensiblement continu dans la direction circonférentielle ;
- le déplacement radial des premiers secteurs angulaires (100) et des deuxièmes secteurs angulaires (200) jusqu'à ce qu'une configuration contractée dudit tambour (1) soit définie dans laquelle les premiers secteurs angulaires (100) sont adjacents de manière circonférentielle les uns aux autres et les deuxièmes secteurs angulaires (200) sont adjacents de manière circonférentielle les uns aux autres et agencés dans une position radialement intérieure par rapport aux premiers secteurs angulaires (100).

13. Procédé selon la revendication 12, dans lequel le déplacement radial desdits premiers secteurs angulaires (100) et deuxièmes secteurs angulaires (200) comprend le déplacement simultané desdits premiers secteurs angulaires (100) et deuxièmes secteurs angulaires (200) à différentes vitesses.

14. Procédé selon la revendication 12 ou 13, dans lequel le déplacement radial desdits premiers secteurs angulaires (100) et deuxièmes secteurs angulaires (200) comprend le fait de soumettre simultanément lesdits premiers secteurs angulaires (100) et deuxièmes secteurs angulaires (200) à une même force axiale prédéterminée.

15. Procédé selon l'une quelconque des revendications 12 à 14, comprenant le blocage du mouvement radial dudit tambour (1) lors de la détection d'un signal d'anomalie.
